# EUROPÄISCHE PATENTANMELDUNG

(11) **EP 4 101 788 A1**
(43) Veröffentlichungstag der Anmeldung: **14.12.2022**
(21) Anmeldenummer: 22172714.2
(22) Anmeldetag: 11.05.2022
(51) Int. Cl.: B65D 90/04

(54) **FLEXIBLER BEHÄLTER INNERHALB EINES FRACHTRAUMES**

(30) Priorität: 07.06.2021 DE 102021205733
(71) Anmelder: Benecke-Kaliko AG, 30419 Hannover (DE)
(72) Erfinder: Etzl, Thomas Paul, 30165 Hannover (DE)
(74) Vertreter: Continental Corporation

(57) **Zusammenfassung**

Die Erfindung betrifft einen flexiblen Behälter (1) innerhalb eines Frachtraumes (2). Der Erfindung liegt die Aufgabe zugrunde, eine Lösung für einen Frachtraum bereit zu stellen, sodass der Frachtraum für den wechselnden Transport von mindestens zwei Transportgütern keinem Reinigungsvorgang unterzogen werden muss. Eine weitere Aufgabe besteht darin, den Frachtraum in mehrere Teilfrachträume zu unterteilen und deren Volumen bedarfsgerecht anpassen zu können. Die Lösung dieser Aufgabe ergibt sich durch einen flexiblen Behälter (1) mit den Merkmalen des Hauptanspruchs. Hierbei weist ein Frachtraum (2) erfindungsgemäß mindestens einen flexiblen Behälter (1) auf, wobei der mindestens eine flexible Behälter (1) mindestens ein Frachtvolumen aufweist und das Frachtvolumen durch den mindestens einen flexiblen Behälter (1) vom Frachtraum (2) abgegrenzt ist.

## Beschreibung

Die Erfindung betrifft einen flexiblen Behälter innerhalb eines Frachtraumes gemäß dem Oberbegriff des Anspruchs 1 sowie einen Frachtraum gemäß Anspruch 8, welcher mindestens einen erfindungsgemäßen flexiblen Behälter umfasst.

### Stand der Technik

Für den Transport von Materialien und Rohstoffen verschiedener Art werden im Güterverkehr auf der Straße, zu Schiene oder zu Wasser Silo- und Tankfahrzeuge oder Container eingesetzt. Hierbei werden in der Regel Transportgüter an einem Ort beladen und zu einem anderen Ort befördert, wo eine Entladung erfolgt. Hierbei kann die Art der Fracht von Mal zu Mal unterschiedlich sein, sodass nach einem abgeschlossenen Transportvorgang umfangreiche Reinigungsprozesse des Frachtraums erforderlich sind, um eine Kontamination der neuen Fracht mit Fremdstoffen zu vermeiden. Da der Reinigungsprozess nicht immer vor Ort durchführbar ist, können hierdurch Leerfahrten entstehen, die dem Spediteur hohe Kosten verursachen. Des Weiteren sind viele der Transportmittel nachteiliger Weise nur für den gleichzeitigen Transport von einem Frachtgut ausgebildet.

Weiterhin besteht die Möglichkeit, Transportmittel einzusetzen, deren Frachtraum mittels starrer Trennwände in mehrere Teilfrachträumen aufgeteilt ist. Da hierdurch das Volumen der einzelnen Teilfrachträume definiert und nicht veränderlich ist, erfolgt eine Auslastung der Teilfrachträume nicht immer optimal, was zu wirtschaftlichen Nachteilen für den Transportunternehmer oder zu höheren Kosten für den Auftraggeber führen kann.

Aus dem Stand der Technik sind daher bereits Lösungen bekannt, womit eine Verschmutzung von Frachträumen vermieden werden kann.

Die EP 1 992 576 A1 betrifft ein Verfahren zum Befüllen von Transportcontainern mit Kunststoffgranulaten. Der Transport-Container weist hierbei einen flexiblen Kunststoff-Inliner auf. Zur Vermeidung von Verunreinigungen des Kunststoffgranulats beim Umfüllvorgang wird der Frachtraum mit staubfreier Druckluft beaufschlagt, sodass eine nach unten gerichtete laminare Luftströmung Fremdteilchen aus der Umgebungsluft vom Kunststoffgranulat fernhält.

Die US 6.662.962 B2 bezieht sich auf den Transport von Schüttgut in Hochseecontainern. Hierbei wird der Container mit einem flexiblen Sack aus undurchlässigem Kunststoffmaterial ausgekleidet. Insbesondere betrifft die Erfindung Mittel zur Rückhaltung bzw. zur Stabilisierung der flexiblen Auskleidung. Nachteiliger Weise müssen gemäß Gegenstand des Eingangs erläuterten Stand der Technik die flexiblen Behälter aus dem Transport-Container entfernt werden, wenn eine andere Fracht transportiert werden soll. Für die Auskleidung des Containers und die Fixierung des flexiblen Behälters in diesem ist ein hoher Zeitaufwand erforderlich.

### Aufgabe

Der Erfindung liegt die Aufgabe zugrunde, eine Lösung für einen Frachtraum bereit zu stellen, sodass der Frachtraum für den wechselnden Transport von mindestens zwei Transportgütern keinem Reinigungsvorgang unterzogen werden muss. Hierdurch soll durch den Wegfall von Reinigungsvorgängen und eventuellen Leerfahrten ohne Fracht zum Ort der Reinigung insbesondere die Wartezeit zwischen Entlade- und Beladevorgang verkürzt werden. Eine weitere Aufgabe besteht darin, den Frachtraum in mehrere Teilfrachträume zu unterteilen und deren Volumen bedarfsgerecht anpassen zu können.

### Lösung der Aufgabe

Die Lösung dieser Aufgabe ergibt sich durch einen flexiblen Behälter mit den Merkmalen des Hauptanspruchs. Hierbei weist ein Frachtraum erfindungsgemäß mindestens einen flexiblen Behälter auf, wobei der mindestens eine flexible Behälter mindestens ein Frachtvolumen aufweist und das Frachtvolumen durch den mindestens einen flexiblen Behälter vom Frachtraum abgegrenzt ist. Anspruch 8 offenbart einen Frachtraum mit einem erfindungsgemäßen flexiblen Behälter. Weitere vorteilhafte Ausbildungen sind in den abhängigen Ansprüchen offenbart.

### Vorteile der Erfindung

Anspruch 1 offenbart einen erfindungsgemäßen flexiblen Behälter innerhalb eines Frachtraums, wobei der Frachtraum mindestens einen flexiblen Behälter aufweist. Der mindestens eine flexible Behälter weist mindestens ein Frachtvolumen auf, wobei das Frachtvolumen durch den mindestens einen flexiblen Behälter vom Frachtraum abgegrenzt ist.

Für den Transport von Materialien und Rohstoffen verschiedener Art können im Güterverkehr auf der Straße, zu Schiene oder zu Wasser verschiedene, einen Frachtraum bildende Transportmittel eingesetzt werden. Beispielhaft können dies Silo- und Tankfahrzeuge oder Container sein. Diese Transportmittel können an einem Ort mit Transportgütern beladen werden und zu einem anderen Ort befördert werden, wo eine Entladung und eine erneute Beladung erfolgen kann.

Durch die erfindungsgemäße Lösung kann das mindestens eine Frachtvolumen des flexiblen Behälters durch den mindestens einen flexiblen Behälter von dem Frachtraum abgegrenzt werden. Das Innenvolumen des flexiblen Behälters kann in diesem Fall das gesamte Volumen des zur Verfügung stehenden Frachtraumes einnehmen.

Die erfindungsgemäße Lösung bietet weiterhin den Vorteil, dass durch den mindestens einen flexiblen Behälter eine Aufteilung des Frachtraums in mindestens einen ersten Teilfrachtraum und einen zweiten Teilfrachtraum erfolgen kann. Hierdurch ist der Frachtraum ausgebildet, gleichzeitig mindestens ein erstes Transportgut und ein zweites Transportgut aufnehmen zu können, ohne dass eine Kontamination der beiden Transportgüter mit Fremdstoffen erfolgen kann. Es zeigt sich als besonders vorteilhaft, dass die Teilfrachträume wiederholt mit demselben Transportgut befüllt werden können, ohne dass eine zeit- und kostenaufwändige Reinigung erfolgen muss. Hierdurch kann bei wechselnden Transportgütern die Zeitspanne zwischen dem Entlade- und einem wiederholten Beladevorgang verkürzt werden, was insbesondere im Kurzstreckenverkehr, also dem Transport zwischen zwei nahegelegenen Belade- und Entladestellen, zu hohen Kosteneinsparungen führen kann. Durch die Wahl der Größe des flexiblen Behälters kann das jeweilige Teilfrachtraumvolumen sehr leicht bedarfsgerecht angepasst werden. Ebenso kann ein nachträglicher Tausch des flexiblen Behälters bei Verschleiß oder ein Tausch in einen flexiblen Behälter eines anderen Volumens sehr leicht erfolgen.

Es können weiterhin mehrere flexible Behälter in dem Frachtraum vorgesehen sein, womit die Anzahl der Teilfrachträume individuell und bedarfsgerecht erweitert werden kann. Eine weitere vorteilhafte Eigenschaft des flexiblen Behälters besteht darin, dass sich das Volumen des ersten Teilfrachtraums an das Volumen des ersten Transportgutes anpassen kann. Mit anderen Worten gesagt kann der flexible Behälter expandieren, indem dieser mit einem ersten Transportgut befüllt wird. Eine Expansion des flexiblen Behälters kann in dem Volumen erfolgen, welches das erste Transportgut in dem flexiblen Behälter einnimmt. Das maximale Volumen des ersten Teilfrachtraums ist durch das Volumen des flexiblen Behälters bestimmt. So kann auf besonders vorteilhafte Weise das verbleibende Volumen des zweiten Teilfrachtraumes in Abhängigkeit des Volumens des ersten Transportgutes maximal groß gehalten werden.

Der flexible Behälter kann mehrere voneinander getrennte Frachtvolumen aufweisen. Mit anderen Worten gesagt kann hierbei ein flexibler Behälter mehrere Trennwände aufweisen, die das Frachtvolumen des flexiblen Behälters in mehrere Teilfrachtvolumen unterteilen. So kann auf besonders vorteilhafte Weise durch die Installation eines flexiblen Behälters eine Vielzahl von Teilfrachtvolumen geschaffen werden.

In einer weiteren Ausführungsform kann das Frachtvolumen des flexiblen Behälters mindestens einen weiteren flexiblen Behälter aufweisen. Mit anderen Worten gesagt können zur Schaffung mehrerer Teilfrachtvolumen eine Vielzahl von flexiblen Behältern ineinander installiert werden, wodurch die Anzahl der Teilfrachtvolumen innerhalb des Frachtvolumens des einen flexiblen Behälters variabel gestaltet werden kann.

Bei dem Transportgut kann es sich sowohl um Flüssigkeiten, Gase als auch Feststoffe handeln.

Gemäß einem weiteren Aspekt des erfindungsgemäßen flexiblen Behälters kann dieser expandierbar und komprimierbar ausgebildet sein. Hierdurch kann auf besonders vorteilhafte Weise eine variable Aufteilung des Frachtraumes in einzelne Teilfrachträume erfolgen.

Mit anderen Worten gesagt kann der flexible Behälter expandiert werden, wenn ein für den flexiblen Behälter vorgesehenes erstes Transportgut transportiert werden soll.

Ein Komprimieren des flexiblen Behälters kann dann erfolgen, wenn zum Beispiel ausschließlich ein zweites Transportgut in dem zweiten Teilfrachtraum transportiert werden soll. Durch das Komprimieren des flexiblen Behälters kann das Volumen der weiteren Teilfrachträume vergrößert werden. Durch die damit verbundene flexible Aufteilung der Volumina der einzelnen Teilfrachträume kann auf besonders vorteilhafte Weise ein maximales Frachtraumvolumen für das jeweilige zu transportierende Gut bereitgestellt werden. Hierdurch kann die Auslastung des Frachtraumes bedarfsgerecht optimiert werden.

Gemäß einem weiteren Aspekt der vorliegenden Erfindung ist der mindestens eine flexible Behälter aus einem polymeren Material, vorzugsweise aus einem Elastomer, ausgebildet.

Es kann hierbei auf besonders vorteilhafte Weise aus einem großen Spektrum an polymeren Materialien gewählt werden, um eine anforderungsgerechte Lösung für den flexiblen Behälter bereit zu stellen. Insbesondere elastomere Materialien sind für den erfindungsgemäßen flexiblen Behälter besonders gut geeignet, da eine hohe Biegeflexibilität bei einer geringen Wandstärke und gleichzeitig hoher Belastungsfähigkeit erreicht werden kann. Weiterhin kann das elastomere Material beständig gegenüber den zu transportierenden Medien ausgebildet sein. So kann das elastomere Material beispielsweise eine Diffusion von Gasen durch die Wand des flexiblen Behälters hindurch verhindern. Zur Verstärkung des elastomeren Materials können Gewebe- und / oder Festigkeitsträgerlagen in das elastomere Material eingebettet sein. Auf diese Weise können selbst unter hohem Druck stehende Medien durch den flexiblen Behälter aufgenommen werden.

Zumeist kommen Elastomere auf der Basis vulkanisierbarer Kautschukmischungen, umfassend wenigstens eine Kautschukkomponente (z.B. EPM, EPDM, HNBR, FKM) sowie Mischungsingredienzien, zum Einsatz. Grundsätzlich können alle der fachkundigen Person bekannten Elastomere verwendet werden. In einer bevorzugten Ausführungsform ist das Elastomer ausgewählt aus der Gruppe bestehend aus Ethylen-Propylen-Mischpolymerisat (EPM) oder Ethylen-Propylen-Dien-Mischpolymerisat (EPDM) oder Nitrilkautschuk (NBR) oder (teil)hydrierter Nitrilkautschuk (HNBR) oder Fluor-Kautschuk (FKM) oder Chloropren-Kautschuk (CR) oder Naturkautschuk (NR) oder Styrol-Butadien-Kautschuk (SBR) oder Isopren-Kautschuk (IR) oder Butylkautschuk (IIR) oder Brombutylkautschuk (BIIR) oder Chlorbutylkautschuk (CIIR) oder Butadien-Kautschuk (BR) oder Chloriertes Polyethylen (CM) oder Chlorsulfoniertes Polyethylen (CSM) oder Polyepichlorhydrin (ECO) oder Ethylen-Vinylacetat-Kautschuk (EVA) oder Acrylat-Kautschuk (ACM) oder Ethylen-Acrylat-Kautschuk (AEM) oder Silikonkautschuk (MQ, VMQ, PVMQ, FVMQ) oder fluorierter Methylsilikonkautschuk (MFQ) oder perfluorinierter Propylen-Kautschuk (FFPM) oder Perfluorcarbon-Kautschuk (FFKM) oder Polyurethan (PU).

Die genannten Kautschuke können hierbei alleine oder im Verschnitt, d.h. als Blend, eingesetzt werden.

Gemäß einem weiteren Aspekt der vorliegenden Erfindung ist der mindestens eine flexible Behälter durch Erzeugen eines Unterdrucks komprimierbar. So kann auf besonders vorteilhafte Weise auf eine Antriebsmechanik zum Zusammenfalten des flexiblen Behälters verzichtet werden, wodurch wiederum Gewicht und Bauraumvolumen eingespart werden kann. Das zur Verfügung stehende Frachtraumvolumen kann auf diese Weise maximal durch Transportgut belegt werden.

Gemäß einem weiteren Aspekt der vorliegenden Erfindung ist der mindestens eine flexible Behälter durch Erzeugen eines Überdrucks expandierbar. So kann auch zum Expandieren des flexiblen Behälters auf eine Antriebsmechanik verzichtet werden. Es ergeben sich analog zu der vorherigen Ausführung die bereits beschriebenen Vorteile.

Gemäß einer weiteren Ausführung der vorliegenden Erfindung ist das Erzeugen des Unterdrucks oder des Überdrucks mittels eines Luftdrucks erreichbar. Es kann somit auf die bestehende Fahrzeugarchitektur zurückgegriffen werden, die zumeist über einen Kompressor zur Erzeugung eines Unter- oder Überdrucks verfügt.

Gemäß einem weiteren Aspekt der vorliegenden Erfindung weist der mindestens eine flexible Behälter mindestens eine verschließbare Öffnung zum Befüllen und Entleeren des flexiblen Behälters auf. Die Öffnung kann auf vorteilhafte Weise darüber hinaus über eine Kupplung oder Schnittstelle verfügen, die mit einem entsprechenden Schlauch oder einer Rohrleitung korrespondiert, über die das Transportgut zu- oder abgeleitet wird.

Eine weitere vorteilhafte Ausführung offenbart einen Frachtraum, wobei der Frachtraum mindestens einen erfindungsgemäßen flexiblen Behälter aufweist. Hierdurch lassen sich die zuvor erläuterten Vorteile des flexiblen Behälters auf einen Frachtraum übertragen.

Gemäß einem weiteren Aspekt der vorliegenden Erfindung ist der Frachtraum durch das Innenvolumen eines Transportcontainers gebildet ist. Hierdurch lassen sich die zuvor erläuterten Vorteile des flexiblen Behälters auf einen Transportcontainer übertragen.

Gemäß einem weiteren Aspekt der vorliegenden Erfindung ist der Frachtraum durch das Innenvolumen eines Silofahrzeuges gebildet. Beispiele hierfür können ein Waggon für Schienenfahrzeuge, ein Lastkraftwagen oder ein Anhänger oder Auflieger sein. Hierdurch lassen sich die zuvor erläuterten Vorteile des flexiblen Behälters auf ein Silofahrzeug übertragen.

### Erläuterung Figuren

Anhand von Figuren werden im Folgenden Ausführungsbeispiele der Erfindung näher erläutert.

Fig. 1 zeigt ein Silofahrzeug mit einem komprimierten flexiblen Behälter innerhalb des Frachtraumes.

Fig. 2 zeigt ein Silofahrzeug mit einem expandierten flexiblen Behälter innerhalb des Frachtraumes.

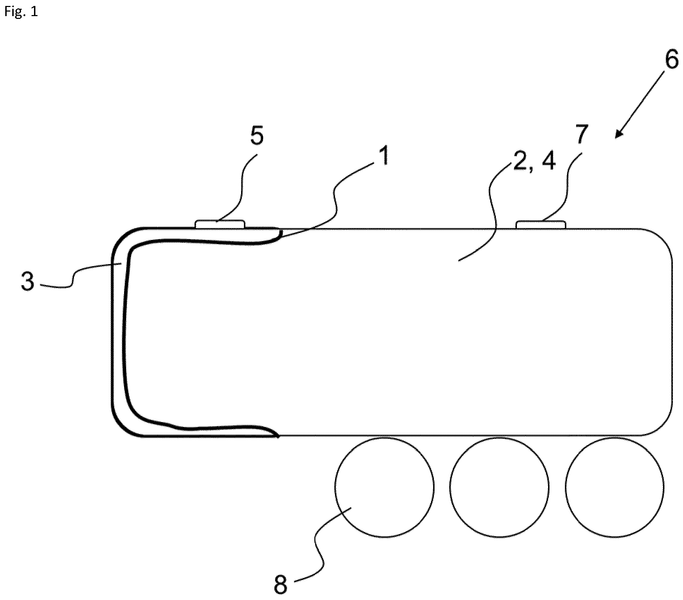

Der in der Figur 1 dargestellte flexible Behälter 1 ist innerhalb des Frachtraumes 2 des Silofahrzeuges 6 angeordnet. Das Silofahrzeug 6 ist als LKW-Auflieger dargestellt, der über Räder 8 verfahrbar ist. Der flexible Behälter 1 ist in dem Ausführungsbeispiel der Figur 1 in komprimierter Form dargestellt. Der flexible Behälter 1 ist aus einem elastomeren Material ausgebildet und weist daher eine hohe Flexibilität bei gleichzeitig geringer Wandstärke auf. So ist es möglich, den flexiblen Behälter 1, wie in Figur 1 dargestellt, platzsparend zusammenzufalten, sodass durch den komprimierten flexiblen Behälter 1 nur ein minimales Volumen eines ersten Teilfrachtraums 3 des Frachtraums 2 beansprucht wird. Das Zusammenfalten des flexiblen Behälters 1 erfolgt durch Bilden eines Unterdrucks innerhalb des ersten Teilfrachtraums 3, indem ein Unterdruckschlauch über eine korrespondierende Schlauchkupplung an die verschließbare Öffnung des ersten Teilfrachtraums 5 angeschlossen wird. Der Unterdruckschlauch ist mit dem Kompressor der nicht näher dargestellten Zugmaschine des Silofahrzeuges 6 verbunden.

Der verbleibende, nicht durch den flexiblen Behälter 1 eingenommene zweite Teilfrachtraum 4 kann über die verschließbare Öffnung des zweiten Teilfrachtraums 7 mit einem zweiten Transportgut befüllt oder wieder entleert werden. Die verschließbare Öffnung des ersten Teilfrachtraums 5 dient zum Befüllen oder Entleeren des ersten Teilfrachtraums 3, welcher durch das Innenvolumen des flexiblen Behälter 3 gebildet und durch den flexiblen Behälter 3 von dem zweiten Teilfrachtraum 4 abgegrenzt wird.

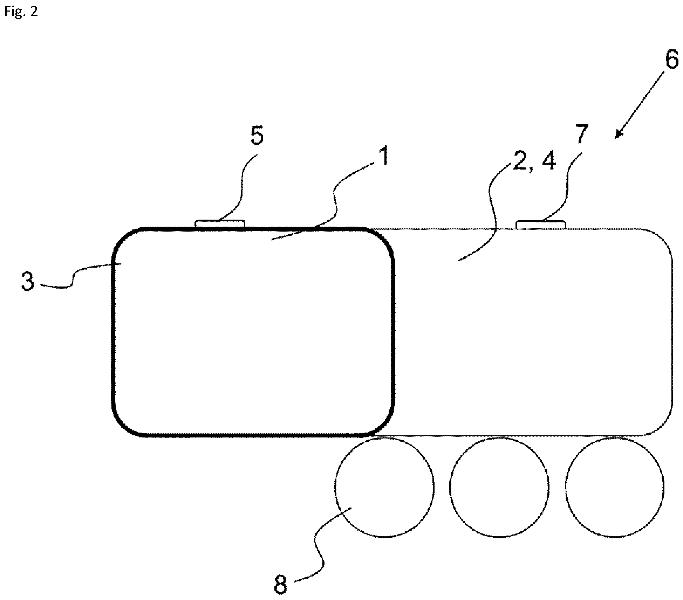

Der flexible Behälter 1 ist in dem Ausführungsbeispiel der Figur 2 in expandierter Form dargestellt. Das Expandieren des flexiblen Behälters 1 erfolgt dadurch, dass ein erstes Transportgut über die verschließbare Öffnung des ersten Teilfrachtraums 5 in den ersten Teilfrachtraum 3 eingeleitet wird. Das erste Transportgut, welches Beispielsweise eine Flüssigkeit ist, verdrängt den flexiblen Behälter 1, wodurch der erste Teilfrachtraum 3 vergrößert und durch das Volumen der Flüssigkeit eingenommen wird. Das maximale Fassungsvolumen des ersten Teilfrachtraumes 3 ist durch die Größe des flexiblen Behälters 1 bestimmt. Das Fassungsvolumen des zweiten Teilfrachtraums 4 ergibt sich durch das mit dem ersten Transportgut eingenommene Volumen des ersten Teilfrachtraumes 3.

### Bezugszeichenliste (Teil der Beschreibung)

- 1: Flexibler Behälter
- 2: Frachtraum
- 3: Erster Teilfrachtraum
- 4: Zweiter Teilfrachtraum
- 5: Verschließbare Öffnung des ersten Teilfrachtraums
- 6: Silofahrzeug
- 7: Verschließbare Öffnung des zweiten Teilfrachtraums
- 8: Räder

## Patentansprüche

1. Flexibler Behälter (1) innerhalb eines Frachtraumes (2),
**dadurch gekennzeichnet, dass**
der Frachtraum (2) mindestens einen flexiblen Behälter (1) aufweist, wobei der mindestens eine flexible Behälter (1) mindestens ein Frachtvolumen aufweist und das Frachtvolumen durch den mindestens einen flexiblen Behälter (1) vom Frachtraum (2) abgegrenzt ist.

2. Flexibler Behälter (1) nach Anspruch 1;
**dadurch gekennzeichnet, dass**
der mindestens eine flexible Behälter (1) expandierbar und komprimierbar ausgebildet ist.

3. Flexibler Behälter (1) nach einem der vorhergehenden Ansprüche,
**dadurch gekennzeichnet, dass**
der mindestens eine flexible Behälter (1) aus einem polymeren Material, vorzugsweise aus einem Elastomer, ausgebildet ist.

4. Flexibler Behälter (1) nach einem der vorhergehenden Ansprüche,
**dadurch gekennzeichnet, dass**
der mindestens eine flexible Behälter (1) durch Erzeugen eines Unterdrucks komprimierbar ist.

5. Flexibler Behälter (1) nach einem der vorhergehenden Ansprüche,
**dadurch gekennzeichnet, dass**
der mindestens eine flexible Behälter (1) durch Erzeugen eines Überdrucks expandierbar ist.

6. Flexibler Behälter (1) nach einem der vorhergehenden Ansprüche,
**dadurch gekennzeichnet, dass**
das Erzeugen des Unterdrucks oder des Überdrucks mittels eines Luftdrucks erreichbar ist.

7. Flexibler Behälter (1) nach einem der vorhergehenden Ansprüche,
**dadurch gekennzeichnet, dass**
der mindestens eine flexible Behälter (1) mindestens eine verschließbare Öffnung (5) aufweist.

8. Frachtraum (2), **dadurch gekennzeichnet, dass** der Frachtraum (2) mindestens einen flexiblen Behälter (1) umfasst.

9. Frachtraum (2) nach Anspruch 8,
**dadurch gekennzeichnet, dass**
der Frachtraum (2) durch das Innenvolumen eines Transportcontainers gebildet ist

10. Frachtraum (2) nach Anspruch 8,
**dadurch gekennzeichnet, dass**
der Frachtraum (2) durch das Innenvolumen eines Silofahrzeuges gebildet ist.
